(19) **Europäisches Patentamt**

**European Patent Office**

**Office européen des brevets**

(11) **EP 0 777 110 B1**

(12) **EUROPÄISCHE PATENTSCHRIFT**

(45) Veröffentlichungstag und Bekanntmachung des Hinweises auf die Patenterteilung:
**10.08.2005 Patentblatt 2005/32**

(51) Int Cl.7: **G01F 1/80**

(21) Anmeldenummer: **96118077.5**

(22) Anmeldetag: **12.11.1996**

(54) **Messrotor für Massendurchflussmessgeräte**

Measuring rotor for mass flow meters

Rotor de mesure pour débimètres massiques

(84) Benannte Vertragsstaaten:
**BE CH DE ES FR GB IT LI**

(30) Priorität: **14.11.1995 DE 19542290**

(43) Veröffentlichungstag der Anmeldung:
**04.06.1997 Patentblatt 1997/23**

(73) Patentinhaber: **Schenck Process GmbH 64293 Darmstadt (DE)**

(72) Erfinder: **Müller, Robert 64720 Michelstadt (DE)**

(74) Vertreter: **Behrens, Helmut, Dipl.-Ing. Gross-Gerauer Weg 55 64295 Darmstadt (DE)**

(56) Entgegenhaltungen:
**EP-A- 0 146 902          EP-A- 0 474 121 US-A- 2 602 330**

**Beschreibung**

Die Erfindung betrifft einen Meßrotor für Massendurchflußmeßgeräte, die nach dem Coriolis-Meßprinzip arbeiten, mit einem antreibbaren Rotorboden, einem kreisringförmigen Rotordeckel und einer Mehrzahl von zwischen dem Rotorboden und dem Rotordeckel angeordneten Rotorschaufeln, wobei der Rotorboden und der Rotordeckel drehfest miteinander verbunden sind und zwischen ihnen ein während des Meßbetriebs rotierender, von innen nach außen durchströmter und von den Rotorschaufeln unterteilter Fließraum ausgebildet ist.

Ein derartiger Meßrotor ist aus der DE 33 46 145 C2 bekannt. Er besitzt einen ebenen, senkrecht zur Drehachse angeordneten Rotorboden mit einem zentral angeordneten Leitkegel und einem kreisringförmigen Rotordeckel mit einer zentralen Öffnung für den axialen Zustrom des zu messenden Schüttgutes. Der Rotorboden und der Rotordeckel sind über ebene, radial angeordnete Rotorschaufeln drehfest miteinander verbunden. Der Meßrotor wird von einem pendelnd aufgehängten Motor mit konstanter Drehzahl angetrieben, wobei das Antriebsmoment gemessen und zur Ermittlung des diesem proportionalen Massenstroms herangezogen wird.

Mit solchen Meßrotoren ausgestattete Massendurchflußmeßgeräte werden zur Messung und Dosierung gut fließender und nicht zum Anbacken neigender Schüttgüter eingesetzt. Ihre Vorteile bestehen in der hohen Meßgenauigkeit, der schnellen Meßwerterfassung und der Unabhängigkeit der Meßergebnisse von den physikalischen Eigenschaften der Schüttgüter. Sie sind wegen der erforderlichen Antriebsleistung gegenüber Prallplattenmeßgeräten und Meßschurrenmeßgeräten gleichwohl aber nur bei nicht allzu großen Massenströmen konkurrenzfähig. Bei Massenströmen von beispielsweise über 100 t/h scheuen viele Anwender die hohen Betriebskosten und ziehen andere Meßverfahren dem unbestritten besseren Coriolis-Meßprinzip vor, das in der genannten DE 33 46 145 C2 näher erläutert wird.

Der Erfindung liegt die Aufgabe zugrunde, einen Meßrotor der eingangs genannten Art so weiter zu entwickeln, daß er auch für größere Massenströme wirtschaftlich einsetzbar ist, d.h. daß die genannten Vorteile des Coriolis-Meßprinzips auch bei großen Massenströmen nutzbar gemacht werden können, ohne daß dies mit vergleichsweise großen Antriebsleistungen und damit hohen Betriebskosten erkauft werden muß.

Zur Lösung dieser Aufgabe wird erfindungsgemäß vorgeschlagen, daß die Rotorschaufeln sich zwischen Rotorboden und Rotordeckel parallel zur Drehachse des Meßrotors erstrecken, als ebene Wandungsteile ausgebildet und unter einem Winkel zu einer ihre Austrittskanten schneidenden radialen Ebene bezüglich der Drehrichtung des Meßrotors nach rückwärts angestellt sind.

Der Erfindung liegt die Erwägung zugrunde, daß es beim Coriolis-Meßprinzip stets möglich ist, ein ausreichend starkes Meßsignal zu gewinnen, wenn es sich um große Massenströme handelt und daß man deswegen auf rückwärts angestellte Schaufeln zurückgreifen kann, ohne Einbußen bei der Meßgenauigkeit und der Schnelligkeit der Meßwerterfassung befürchten zu müssen. Tatsächlich haben Versuche ergeben, daß man bei großen Massenströmen mit einer dem Anstellwinkel proportionalen Teilkomponente der Corioliskraft die gleiche Meßqualität erreichen kann, wie bei radial ausgerichteten Schaufeln, bei der die retadierende Corioliskraft und damit auch das erforderliche Antriebsmoment wesentlich größer sind. Bei ebenen Schaufeln mit einem Anstellwinkel von 30° zu einer die Austrittskante der Schaufel schneidenden, radialen Ebene konnte die Antriebsleistung etwa um 40% reduziert werden. Maßgebend für diesen Effekt ist hauptsächlich der Anstellwinkel im Bereich der Austrittsenden der Schaufeln und eine Schaufelkontur, der die Schüttgutströmung gut folgen kann.

Die erreichte Minderung der erforderlichen Antriebsleistung kann auch damit erklärt werden, daß bei rückwärts angestellten Rotorschaufeln die Umfangskomponente der Absolutgeschwindigkeit des Schüttgutes am Austritt aus dem Rotor kleiner ist als bei radial angeordneten Schaufeln und daß dementsprechend auch das Antriebsmoment und die Antriebsleistung reduziert werden können. Weitere Vorteile der Erfindung bestehen darin, daß die Stoßwirkung am Schaufeleintritt reduziert und damit die Meßgenauigkeit weiter verbessert wird, und daß der Schüttgutdruck auf die Schaufeln kleiner ist, wodurch die Gefahr von Anbackungen reduziert und die Langzeitgenauigkeit verbessert wird.

Die Rotorschaufeln können aber auch als eindimensional gekrümmte Wandungsteile ausgebildet werden, wobei sie vorteilhafterweise derartig gekrümmt sind, daß sie an jedem Punkt ihrer Längserstreckung unter dem gleichen Winkel zu einer den Punkt schneidenden radialen Ebene rückwärts angestellt sind.

Dabei kann der Winkel je nach Auslegungsvorgaben zwischen 15° und 45° liegen. Bevorzugt ist ein Bereich von 25° bis 35°, insbesondere ein Winkel von etwa 30°.

Der Rotorboden weist zweckmäßigerweise einen zentralen Leitkegel auf, der eine Vorumlenkung des Massenstroms bewirkt, bevor dieser von den Rotorschaufeln erfaßt wird. Dementsprechend ist im Rotordeckel eine Zufuhröffnung für den axialen Zustrom des Schüttgutes vorgesehen, der etwas größer ist als die Basis des Leitkegels, der halb so hoch wie die Rotorschaufeln sein kann. Erfindungsgemäß können weiterhin der Rotorboden und der Rotordeckel mittels der Rotorschaufeln drehfest miteinander verbunden sein. Dadurch wird ein konstruktiv einfacher und mechanisch robuster Meßrotor erreicht. Die Erfindung kann jedoch auch mit einer Ausgestaltung des Meßrotors verwirklicht werden, bei der zwischen den Rotorschaufeln und dem Rotordeckel ein Spalt besteht und der Rotorboden und der Rotordeckel mittels Bolzen oder dergleichen drehfest miteinander verbunden sind. Weiterhin kann vorgesehen sein, daß sich die Rotorschaufeln nur über den radialen Bereich zwischen dem Innen- und dem Außendurchmesser des Rotordeckels erstrecken und der Rotorboden und der Rotordeckel den gleichen Außendurchmesser aufweisen.

Die Erfindung wird nachfolgend anhand eines Ausführungsbeispiels näher erläutert, das in der Zeichnung dargestellt ist. Es zeigen

Figur 1 eine Ansicht eines Meßrotors von oben und

Figur 2 einen vertikalen Schnitt durch den Meßrotor gemäß Figur 2.

Der Meßrotor 1 ist aus einem Rotorboden 2, der aus einer vollflächigen Scheibe besteht, einem Rotordeckel 3, der als kreisringförmige Scheibe ausgebildet ist, und aus Rotorschaufeln 4 zusammengesetzt, die zwischen dem Rotorboden 2 und dem Rotordeckel 3 angeordnet und bezüglich der Drehrichtung des Meßrotors 1 nach rückwärts angestellt sind. Der Rotorboden 2 und der Rotordeckel 3 haben den gleichen Außendurchmesser D. Mit dem Rotorboden 2 ist ein Leitkegel 5 verbunden, der zur Verbesserung der Strömungsverhältnisse dient und koaxial zur Rotorachse und zu einer zentralen Zufuhröffnung 6 im Rotordeckel 3 angeordnet ist. Der Rotorboden 2 ist mit einer Welle 7 verbunden, die zu einem nicht dargestellten Antriebsaggregat gehört. Koaxial zur Zufuhröffnung 6 ist ein Zufuhrkanal 8 angeordnet, durch den das Schüttgut 9 axial in den Meßrotor 1 einströmt, bevor es durch den Leitkegel 5 und die Rotorschaufeln 4 eine radiale Strömungskomponente erhält.

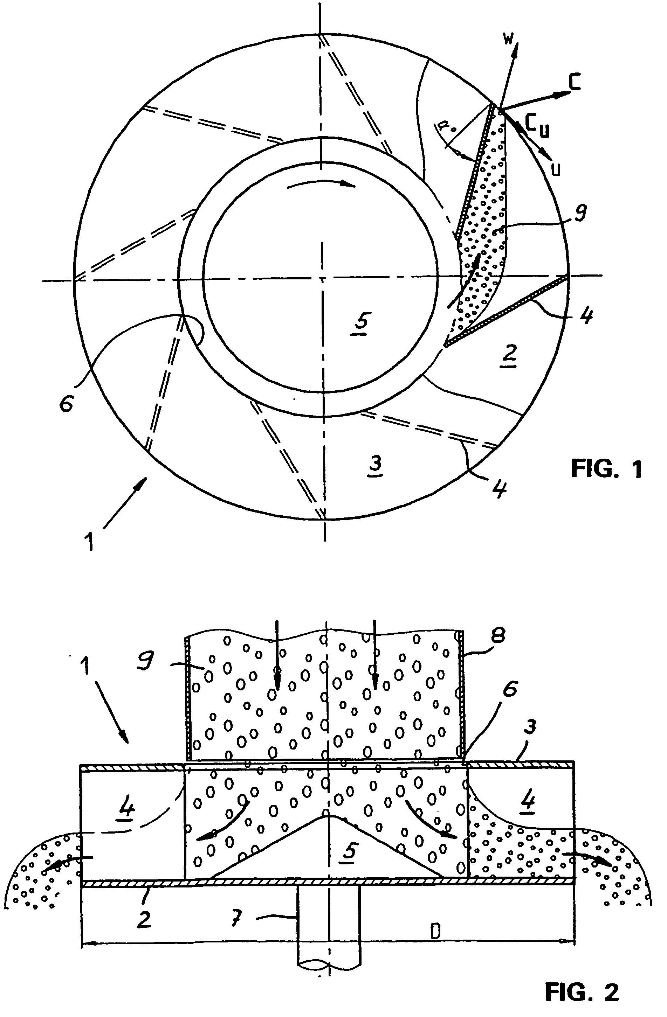

In Figur 1 ist durch je einen Pfeil die Drehrichtung des Meßrotors und die Strömungsrichtung des Schüttgutes 9 angegeben. Im rechten Teil der Darstellung ist der Rotordeckel 3 teilweise weggelassen und es sind zwei Rotorschaufeln 4 im Schnitt dargestellt, während sie in der restlichen Darstellung unterhalb des kreisringförmigen Rotordeckels 3 liegen und gestrichelt gezeichnet sind.

Im Schnittbereich sind für die Mitte des Massenstroms die Geschwindigkeitsvektoren eingetragen. Die Absolutgeschwindigkeit C setzt sich aus den Geschwindigkeitskomponenten W und U zusammen, wobei W die Komponente parallel zur Rotorschaufel 4 ist und U als Umfangskomponente in dem betrachteten Punkt tangential zum Außendurchmesser D des Meßrotors 1 verläuft. Bei einer radial angestellten Rotorschaufel wär die für das Antriebsmoment maßgebliche Komponente der Absolutgeschwindigkeit identisch mit der Umfangskomponente U. Bei der erfindungsgemäßen Anstellung der Schaufeln um den Winkel $\alpha$ rückwärts zur Drehrichtung, beträgt die maßgebliche Komponente $C_u$ jedoch nur einen Teil der Umfangskomponente U, d.h. das erforderliche Antriebsmoment $M_A$ wird im gleichen Maße reduziert. Es beträgt

$$M_A = \dot{m} \cdot r \cdot c_u$$

mit dem Massenstrom $\dot{m}$ und dem Radius r = D/2 des Meßrotors 1.

Als maßgeblicher Anstellwinkel $\alpha$ wird im vorliegenden Fall der Winkel zwischen der ebenen Rotorschaufel 4 und einer die Austrittskante schneidenden radialen Ebene gewählt. der tatsächliche Anstellwinkel ändert sich über die Schaufellänge und ist an der Eintrittskante deutlich größer als an der Austrittskante.

Will man einen über die Schaufellänge gleichbleibenden Anstellwinkel realisieren, muß man auf eindimensional gekrümmte Rotorschaufeln zurückgreifen, die in der Herstellung zwar etwas aufwendiger sind, strömungstechnisch aber Vorteile bieten.

Aus Figur 2 ist der Fließweg des Schüttguts durch den Meßrotor 1 ersichtlich.

Der dargestellte Meßrotor ist speziell für große Massenströme konzipiert. Er erfordert bei gleichem Durchsatz nur einen Bruchteil der Antriebsleistung, die für einen Meßrotor mit radial angeordneten Rotorschaufeln benötigt wird. Außerdem kann man durch eine Änderung des Anstellwinkels $\alpha$ mit dem gleichen Antriebsaggregat unterschiedliche Meßbereiche abdecken. Damit sind alle eingangs genannten Forderungen erfüllt und es wird ein Meßrotor zur Verfügung gestellt, der es ermöglicht, mit vertretbarem Betriebsaufwand das Coriolis-Meßprinzip auch bei sehr großen Massenströmen anzuwenden und die gegenüber anderen Meßverfahren gegebenen Vorteile hinsichtlich Meßgenauigkeit und Schnelligkeit auszunutzen.

**Patentansprüche**

1. Meßrotor (1) für Massendurchflußmeßgeräte, die nach dem Coriolis-Meßprinzip arbeiten, mit einem antreibbaren Rotorboden (2), einem kreisringförmigen Rotordeckel (3) und einer Mehrzahl von zwischen dem Rotorboden (2) und dem Rotordeckel (3) angeordneten Rotorschaufeln (4), wobei der Rotorboden (2) und der Rotordeckel (3) drehfest miteinander verbunden sind und zwischen ihnen ein während des Meßbetriebes rotierender, von innen nach außen durchströmter und von den Rotorschaufeln (4) unterteilter Fließraum ausgebildet ist, **dadurch gekennzeichnet, daß** die Rotorschaufeln (4) sich zwischen Rotorboden (2) und Rotordeckel (3) parallel zur Drehachse des Meßrotors (1) erstrecken, als ebene Wandungsteile ausgebildet und unter einem Winkel ($\alpha$) zu einer ihre Austrittskanten schneidenden radialen Ebene bezüglich der Drehrichtung des Meßrotors nach rückwärts angestellt sind.

**2.** Meßrotor nach Anspruch 1, **dadurch gekennzeichnet, daß** die Rotorschaufeln (4) als eindimensional gekrümmte Wandungsteile ausgebildet sind.

**3.** Meßrotor nach Anspruch 2, **dadurch gekennzeichnet, daß** die Rotorschaufeln (4) derartig gekrümmt sind, daß sie an jedem Punkt ihrer Längsausdehnung unter dem gleichen Winkel ($\alpha$) zu einer den Punkt schneidenden radialen Ebene rückwärts angestellt sind.

**4.** Meßrotor nach einem der vorhergehenden Ansprüche, **dadurch gekennzeichnet, daß** der Winkel ($\alpha$) zwischen 15 und 45° liegt.

**5.** Meßrotor nach einem der vorhergehenden Ansprüche, **dadurch gekennzeichnet, daß** der Winkel ($\alpha$) zwischen 25 und 35° liegt.

**6.** Meßrotor nach einem der vorhergehenden Ansprüche, **dadurch gekennzeichnet, daß** der Winkel ($\alpha$) bei etwa 30° liegt.

**7.** Meßrotor nach einem der vorhergehenden Ansprüche, **dadurch gekennzeichnet, daß** der Rotorboden (2) einen zentralen Leitkegel (5) aufweist.

**8.** Meßrotor nach Anspruch 7, **dadurch gekennzeichnet, daß** der kreisringförmige Rotordeckel (3) eine Zufuhröffnung (6) aufweist, deren Durchmesser etwas größer ist als die Basis des Leitkegels (5).

**9.** Meßrotor nach Anspruch 7 oder 8, **dadurch gekennzeichnet, daß** der Leitkegel (5) etwa halb so hoch ist wie die Rotorschaufeln (4).

**10.** Meßrotor nach einem der vorhergehenden Ansprüche, **dadurch gekennzeichnet, daß** Rotorboden (2) und Rotordeckel (3) mittels der Rotorschaufeln (4) drehfest miteinander verbunden sind.

**11.** Meßrotor nach einem der vorhergehenden Ansprüche, **dadurch gekennzeichnet, daß** sich die Rotorschaufeln (4) nur über den radialen Bereich zwischen Innen- und Außendurchmesser des Rotordeckels (3) erstrecken.

**12.** Meßrotor nach einem der vorhergehenden Ansprüche, **dadurch gekennzeichnet, daß** Rotorboden (2) und Rotordeckel (3) den gleichen Außendurchmesser (D) aufweisen.

**Claims**

**1.** Measuring rotor (1) for mass flow meters that operate on the Coriolis measuring principle, having a drivable rotor base (2), an annular rotor lid (3) and a plurality of rotor blades (4) disposed between the rotor base (2) and the rotor lid (3), wherein the rotor base (2) and the rotor lid (3) are connected to one another in a rotationally locked manner and thre is formed between them a flow space, which rotates during the measuring operation, has a flow through it from the inside to the outside and is subdivided by the rotor blades (4), **characterized in that** the rotor blades (4) extend between rotor base (2) and rotor lid (4) parallel to the axis of rotation of the measuring rotor (1), are formed as flat wall parts and are set in relation to the direction of rotation of the measuring rotor backwards at an angle of inci-dence ($\alpha$) to a radial plane intersecting their outlet edges.

**2.** Measuring rotor according to claim 1, **characterized in that** the rotor blades (4) are formed as one-dimensionally curved wall parts.

**3.** Measuring rotor according to claim 2, **characterized in that** the rotor blades (4) are curved in such a way that at each point of their longitudinal extent they are set backwards at the same angle of inci-dence ($\alpha$) to a radial plane intersecting the point.

**4.** Measuring rotor according to one of the preceding claims, **characterized in that** the angle ($\alpha$) lies be-tween 15 and 45°.

**5.** Measuring rotor according to one of the preceding claims, **characterized in that** the angle ($\alpha$) lies be-tween 25 and 35°.

**6.** Measuring rotor according to one of the preceding claims, **characterized in that** the angle ($\alpha$) is ap-proximately 30°.

**7.** Measuring rotor according to one of the preceding claims, **characterized in that** the rotor base (2) has a central guide cone (5).

**8.** Measuring rotor according to claim 7, **characterized in that** the annular rotor lid (3) has a feed opening (6), the diameter of which is slightly larger than the base of the guide cone (5).

**9.** Measuring rotor according to claim 7 or 8, **characterized in that** the guide cone (5) is approximately half as high as the rotor blades (4).

**10.** Measuring rotor according to one of the preceding claims, **characterized in that** rotor base (2) and rotor lid (3) are connected to one another in a rotationally locked manner by means of the rotor blades (4).

**11.** Measuring rotor according to one of the preceding claims, **characterized in that** the rotor blades (4) extend only over the radial region between inside diameter and outside diameter of the rotor lid (3).

12. Measuring rotor according to one of the preceding claims, **characterized in that** rotor base (2) and rotor lid (3) have the same outside diameter (D).

**Revendications**

1. Rotor de mesure (1) pour débitmètres massiques, qui fonctionnent selon le principe de mesure de Coriolis, comprenant un fond de rotor (2) pouvant être entraîné, un couvercle de rotor (3) en forme d'anneau circulaire et une pluralité d'ailettes de rotor (4) disposées entre le fond du rotor (2) et le couvercle du rotor (3), le fond du rotor (2) et le couvercle du rotor (3) étant reliés entre eux de façon solidaire en rotation et un espace d'écoulement tournant pendant l'opération de mesure, traversé de l'intérieur vers l'extérieur et subdivisé par les ailettes du rotor (4) étant réalisé entre le fond et le couvercle du rotor, **caractérisé en ce que** les ailettes du rotor (4) s'étendent entre le fond du rotor (2) et le couvercle du rotor (3) parallèlement à l'axe de rotation du rotor de mesure (1), étant réalisées sous la forme de parties de paroi planes et étant placées vers l'arrière en formant un angle ($\alpha$) par rapport à un plan radial coupant leurs bords de sortie par rapport au sens de rotation du rotor de mesure.

2. Rotor de mesure selon la revendication 1, **caractérisé en ce que** les ailettes du rotor (4) sont réalisées sous la forme de parties de paroi incurvées dans une dimension.

3. Rotor de mesure selon la revendication 2, **caractérisé en ce que** les ailettes du rotor (4) sont incurvées de telle sorte qu'elles sont placées en arrière en chaque point de son extension longitudinale en formant le même angle ($\alpha$) par rapport à un plan radial coupant le point.

4. Rotor de mesure selon l'une quelconque des revendications précédentes **caractérisé en ce que** l'angle ($\alpha$) se situe entre 15 et 45°.

5. Rotor de mesure selon l'une quelconque des revendications précédentes, **caractérisé en ce que** l'angle ($\alpha$) se situe entre 25 et 35°.

6. Rotor de mesure selon l'une quelconque des revendications précédentes, **caractérisé en ce que** l'angle ($\alpha$) se situe aux environs de 30°.

7. Rotor de mesure selon l'une quelconque des revendications précédentes, **caractérisé en ce que** le fond du rotor (2) présente un cône directeur (5) central.

8. Rotor de mesure selon la revendication 7, **caractérisé en ce que** le couvercle du rotor (3) en forme d'anneau circulaire présente une ouverture d'entrée (6), dont le diamètre est légèrement supérieur à la base du cône directeur (5).

9. Rotor de mesure selon la revendication 7 ou 8, **caractérisé en ce que** le cône directeur (5) présente à peu près la demi-hauteur des ailettes du rotor (4).

10. Rotor de mesure selon l'une quelconque des revendications précédentes, **caractérisé en ce que** le fond du rotor (2) et le couvercle du rotor (3) sont reliés entre eux de façon solidaire en rotation au moyen des ailettes du rotor (4).

11. Rotor de mesure selon l'une quelconque des revendications précédentes, **caractérisé en ce que** les ailettes du rotor (4) ne s'étendent que sur la zone radiale entre le diamètre intérieur et le diamètre extérieur du couvercle du rotor (3).

12. Rotor de mesure selon l'une quelconque des revendications précédentes, **caractérisé en ce que** le fond du rotor (2) et le couvercle du rotor (3) présentent le même diamètre extérieur (D).

**FIG. 1**

**FIG. 2**